# EUROPÄISCHE PATENTANMELDUNG

(11) **EP 4 317 032 A1**
(43) Veröffentlichungstag der Anmeldung: **07.02.2024**
(21) Anmeldenummer: 23186913.2
(22) Anmeldetag: 21.07.2023
(51) Int. Cl.: B65G 29/00, B65G 47/86

(54) **VERFAHREN UND VORRICHTUNG ZUR HANDHABUNG VON WERKSTÜCKEN, INSBESONDERE VERFAHREN UND VORRICHTUNG ZUM WENDEN VON WERKSTÜCKEN**

(30) Priorität: 05.08.2022 DE 102022119706
(71) Anmelder: KHS GmbH, 44143 Dortmund (DE)
(72) Erfinder: MÜLLER, Hartwig, 22952 Lütjensee (DE); SCHETLE, Andreas, 21031 Hamburg (DE)
(74) Vertreter: Eisenführ Speiser

(57) **Zusammenfassung**

Die Erfindung betrifft Verfahren und Vorrichtungen zur Handhabung von Werkstücken, wobei Werkstücke von einem um eine Rotationsachse rotierenden Handhabungsrad transportiert werden, an dem umfangsbeabstandet mehrere Handhabungseinrichtungen angeordnet werden, die jeweils mindestens ein Halteelement zum Halten von mindestens einem Werkstück aufweisen. Das mindestens eine Werkstück soll dabei mindestens zeitweilig von dem Halteelement positioniert werden, wobei diese Positionierung sowohl eine Drehbewegung relativ zu der Rotationsachse des Handhabungsrades als auch eine Drehbewegung relativ zu einer quer zur Rotationsachse des Handhabungsrades verlaufenden Drehachse umfaßt. Die Rotationsachse ist bevorzugt in vertikaler Richtung stehend angeordnet, und die quer dazu stehende Drehachse also bevorzugt in einer horizontalen Ebene liegend angeordnet. Die Drehachse ist wenigstens teilweise aus einer radialen in die tangentiale Richtung gekippt, sodass sie entweder schräg zur radialen Richtung des Handhabungsrades weisend, bevorzugt im Wesentlichen in tangentialer Richtung des Handhabungsrades weisend, weiter bevorzugt in tangentialer Richtung des Handhabungsrades weisend angeordnet ist. Das Halteelement mit dem davon gehaltenen Werkstück wird um diese Drehachse gedreht, wobei das Halteelement zusätzlich relativ zu dieser Drehachse um eine quer dazu stehende Halteelementdrehachse gedreht wird, wobei diese Halteelementdrehachse zusammenfallend mit der Längsachse des vom Halteelement gehaltenen Werkstückes gewählt ist.

## Beschreibung

Die Erfindung betrifft ein Verfahren zur Handhabung von Werkstücken nach dem Oberbegriff von Anspruch 1, insbesondere betrifft die Erfindung ein Verfahren zum Wenden von Werkstücken.

Die Erfindung betrifft darüber hinaus eine Vorrichtung zur Handhabung von Werkstücken nach dem Oberbegriff von Anspruch 9, insbesondere betrifft die Erfindung eine Vorrichtung zum Wenden von Werkstücken,

Gattungsgemäße Verfahren und Vorrichtungen zur Handhabung von Werkstücken sind aus der DE 102 34 374 A1 bekannt. Dort ist gezeigt, dass Werkstücke von einem rotierenden Handhabungsrad transportiert werden. Mindestens ein Werkstück wird dabei mindestens zeitweilig von einem Halteelement positioniert, wobei diese Positionierung sowohl eine Drehbewegung relativ zu einer Rotationsachse des Handhabungsrades umfasst, also den Transport durch die Rotation des Handhabungsrades um dessen Rotationsachse, als auch eine Drehbewegung relativ zu einer quer zur Rotationsachse des Handhabungsrades verlaufenden Drehachse umfaßt. Zu der Positionierungsbewegung durch die Rotation des Handhabungsrades tritt also eine weitere Positionierungsbewegung durch die Drehbewegung hinzu.

Konkret ist in der DE 102 34 374 A1 beschrieben, dass die Rotationsachse des Handhabungsrades in vertikaler Richtung steht. Die quer dazu stehende Drehachse liegt also in einer horizontalen Ebene. Die DE 102 34 374 A1 lehrt, dass diese Drehachse in radialer Richtung des Handhabungsrades weist. Noch konkreter wird in diesem gattungsbildenden Stand der Technik gezeigt, dass eine Kurvenrolle in eine Kurvenbahn eingreift. Die Kurvenbahn ist als Mantelkurve außenseitig an einem stationären, d.h. nichtdrehenden Sockel des Handhabungsrades angeordnet. Die Kurvenrolle läuft um diesen Sockel herum und greift in die Kurvenbahn ein. Die Kurvenrolle bewegt sich während dieses Umlaufs auf und ab entlang der Rotationsachse des Handhabungsrades, also in vertikaler Richtung auf und ab, wie von der Mantelkurve vorgegeben. Ein mit der Kurvenrolle verbundenes Stellelement bewegt sich ebenfalls in vertikaler Richtung auf und ab. Das Stellelement ist mit einem Kopplungselement verbunden, das über eine zahnstangenartige Verzahnung in ein Zahnrad eingreift, das starr auf einer Welle aufsitzt, die zum Halteelement gehört. Die Wellenachse steht in radialer Richtung des Handhabungsrades und senkrecht zur Rotationsachse des Handhabungsrades. Eine Hubbewegung des Kopplungselementes wird in der beschriebenen Weise in eine Rotationsbewegung der Welle und somit in eine Rotationsbewegung des Halteelementes transformiert. Die Verzahnungen sind so gewählt, dass ein maximal durchführbarer Hub der Kurvenrolle in eine Drehung der Welle um 180 ° transformiert wird. Die zyklische Auf- und Abbewegung der Kurvenrolle wird hierdurch in eine zyklische Wendebewegung der Welle um 180° sowie in eine entsprechende Rückbewegung umgesetzt.

Der Begriff des Wendens wird gleichgesetzt mit einer Drehung um 180°.

Bezüglich des Vorrichtungsanspruchs 9 offenbart dieser gattungsbildende Stand der Technik also eine Vorrichtung zur Handhabung von Werkstücken, die als ein rotierendes Handhabungsrad ausgebildet ist bzw. das rotierbar angeordnet und ausgeführt ist. Es weist mindestens ein Halteelement zur mindestens zeitweiligen Positionierung von mindestens einem Werkstück auf. Das Halteelement ist relativ zum Handhabungsrad drehbeweglich gelagert. Die Rotationsachse des Handhabungsrades ist in vertikaler Richtung stehend angeordnet und die Drehachse des Halteelementes ist senkrecht dazu stehend und in Radialrichtung weisend angeordnet.

Es wird als nachteilig angesehen, dass die Positionierbewegung des Halteelementes um die Wellenachse zu einer Bewegung der Flaschen in tangentialer Richtung des Handhabungsrades führt, sodass zwischen benachbarten Halteelementen ein deutlicher Abstand eingehalten werden muss. Aus diesem Grunde zeigt der gattungsbildende Stand der Technik auch lediglich vier Halteelemente, die jeweils um 90° umfangswinkelversetzt auf dem Handhabungsrad angeordnet sind. Dies wird teilweise dadurch kompensiert, dass von jedem Halteelement ein Behälterpaar gehalten wird. Häufig werden aber Bearbeitungsstationen eingesetzt, die eine gleichzeitige Bearbeitung oder Verarbeitung mehrerer Werkstücke nicht ermöglichen, die Zuführung und Ableitung der Werkstücke führt in solchen Fällen häufig auch zu komplexen Übergabestationen mit nachteilig komplizierter Kinematik der verwendeten Bauelemente. Es wird weiterhin als nachteilig angesehen, dass eine Justage aufwendig und eine Vormontage nur teilweise möglich ist.

Es ist daher die Aufgabe der vorliegenden Erfindung, ein Verfahren der einleitend genannten Art derart bereitzustellen, daß bei der Durchführung einer Übergabe der Werkstücke eine verbesserte Positionierung zur Beeinflussung des Übergabevorganges bereitgestellt wird, und die auch die Anordnung einer großen Anzahl an Halteelementen auf einem rotierenden Handhabungsrad erlaubt und somit eine Positionierung einer großen Anzahl an Werkstücken je Zeiteinheit begünstigt. Weiterhin sollen Vorteile bei der Justage und bei der Vormontage erreicht werden.

Diese Aufgabe wird erfindungsgemäß gelöst durch ein Verfahren mit den kennzeichnenden Merkmalen von Verfahrensanspruch 1.

Im Unterschied zum gattungsbildenden Stand der Technik verläuft die Drehachse nicht radial zum Handhabungsrad, sondern sie ist aus dieser radialen Richtung wenigstens teilweise in die tangentiale Richtung gekippt, sodass die Drehachse entweder schräg zur radialen Richtung des Handhabungsrades weisend, bevorzugt im Wesentlichen in tangentialer Richtung des Handhabungsrades weisend, weiter bevorzugt in tangentialer Richtung des Handhabungsrades weisend verläuft. In anderen Worten kann dieser erste Unterschied zum gattungsbildenden Stand der Technik ausgedrückt werden in Form einer orthogonalen Zerlegung der physischen Drehachse in Projektionskomponenten in radialer Richtung und in tangentialer Richtung des Handhabungsrades. Die physische Drehachse hat bei schräger Anordnung zur radialen Richtung des Handhabungsrades sowohl eine tangentiale Projektionskomponente als auch eine radiale Projektionskomponente, die z.B bei Schrägstellung um 45 ° gleich groß sind. Erfindungsgemäß muss es eine tangentiale Projektionskomponente geben, anderenfalls würde die physische Drehachse in radialer Richtung weisen. Bevorzugt ist die Tangentialkomponente größer als die Radialkomponente (Kippen aus der radialen Richtung um mehr als 45°), bevorzugt ist sie viel größer (Kippen aus der radialen Richtung um mehr als 75°), weiter bevorzugt gibt es keine Radialkomponente, das heißt die Drehachse weist in tangentialer Richtung.

Nach dem erfindungsgemäßen Verfahren wird das Halteelement mit dem davon gehaltenen Werkstück um diese Drehachse gedreht, deren Ausrichtung vorstehend erläutert wurde, wobei das Halteelement zusätzlich (und in weiterer Abgrenzung zum gattungsbildenden Stand der Technik) um eine Halteelementdrehachse gedreht wird, die quer zu der zuvor beschriebenen Drehachse steht. Dabei soll diese Halteelementdrehachse mit der Längsachse des vom Halteelement gehaltenen Werkstückes zusammenfallen. Mit anderen Worten ausgedrückt gibt es also eine Rotationsachse, um die das Handhabungsrad dreht. Es gibt eine Drehachse, um die das Halteelement dreht. Weiterhin gibt es eine Halteelementdrehachse, um die eine dritte Drehung erfolgt. Die angegebene Ausrichtung der Halteelementdrehachse bedeutet, dass bei dieser dritten Drehung um die Halteelementdrehachse das Werkstück, z.B. ein Behälter, um seine Längsachse gedreht wird.

Bevorzugt finden beide Bewegungen um die Drehachse und um die Halteelementdrehachse zeitgleich statt, sodass eine überlagerte Gesamtbewegung stattfindet. Während der Drehung um die z.B. in tangentialer Richtung weisende Drehachse dreht sich auch der Behälter um sich selbst. Dabei geht es primär nicht um die Drehung des Behälters, sondern um die Drehung des Halteelementes um die Behälterlängsachse, welches ja den Behälter während der Handhabung und der beschriebenen Drehungen hält. Damit ein Werkstück bzw. ein Behälter dem Halteelement übergeben werden kann, muss das Halteelement für den Behälter zugänglich sein, z.B. radial außenliegend eine Öffnung haben. Typische Halteelemente weisen z.B. zangenartige Fixiermittel auf, wobei die Zangenöffnung radial außenliegend angeordnet ist, damit ein Behälter für eine Übergabe auf das Handhabungsrad in die Zangenöffnung eingeführt und bei der Entnahme von dem Handhabungsrad aus der Zangenöffnung herausgeführt werden kann. Erfolgt nun eine Drehung des Halteelementes um die z.B. in tangentialer Richtung weisende Drehachse, so weist zwar die Zangenöffnung vor dieser Drehung radial nach außen, nach dieser Drehung aber nicht mehr. Handelt es sich z.B. um eine Drehung um 180°, also um ein Wenden, so weist die Zangenöffnung sogar radial nach innen. Die beschriebene dritte Drehung um die Behälterlängsachse ist aber gleichbedeutend damit, dass die Ausrichtung der Zangenöffnung gedreht wird. Sie soll dabei so lange gedreht werden, bis die Zangenöffnung wieder nach radial außen weist, sodass dann auch wieder eine Entnahme des Behälters vom Handhabungsrad und eine Zuführung eines neuen Behälters auf das Handhabungsrad jeweils in radialer Richtung nach außen ermöglicht ist.

Eine weitere Aufgabe der vorliegenden Erfindung ist es, eine Vorrichtung der einleitend genannten Art derart zu konstruieren, daß bei einfacher Konstruktion einer Übergabeeinrichtung eine Übergabe einer großen Anzahl von Werkstücken je Zeiteinheit unterstützt wird. Weiterhin sollen Vorteile bei der Justage und bei der Vormontage erreicht werden. Diese Aufgabe wird erfindungsgemäß gelöst durch eine Vorrichtung mit den kennzeichnenden Merkmalen von Vorrichtungsanspruch 9.

Im Unterschied zum gattungsbildenden Stand der Technik weist die erfindungsgemäße Handhabungseinrichtung eine Welle auf, die drehbar in einem Lagerkörper gelagert ist. Das Halteelement soll mit der Welle um die Wellenachse mitdrehen, ist also mit der Welle mitdrehend verbunden angeordnet. Wie auch zum erfindungsgemäßen Verfahren beschrieben, soll es eine dritte Drehbewegung geben um eine Behälterlängsachse. Dazu ist eine Halteelementwelle so drehbar gelagert, dass relativ zur Welle um eine quer zur Wellenachse stehende Halteelementdrehachse gedreht werden kann, wobei diese Halteelementdrehachse zusammenfällt mit der Längsachse des vom Halteelement gehaltenen Werkstückes bzw. Behälters. Die Halteelementwelle ist in der Welle drehbar gelagert. Ist die Wellenachse der Welle wie zum Verfahren erläutert schrägstehend zur Radialrichtung des Handhabungsrades angeordnet, also mit einer Tangentialkomponente, dient diese Drehung um die Behälterlängsachse der Ausrichtung der oben zum Verfahren beschriebenen Zangenöffnung. Bevorzugt ist auch für die Vorrichtung, dass die Welle im Wesentlichen tangential ausgerichtet ist (die Tangentialkomponente der Orthogonalprojektion ist viel größer als die Radialkomponente, dies entspricht einem Kippen aus der radialen Richtung um mehr als 75°), weiter bevorzugt weist sie in tangentialer Richtung des Handhabungsrades (es gibt dann keine Radialkomponente).

Vorteilhafte Ausgestaltungen sind in den jeweiligen Unteransprüchen angegeben. Die nachfolgend diskutierten bevorzugten Ausführungsformen des Verfahrens finden sich spiegelbildlich auch in der Vorrichtung wieder. Umgekehrt finden sich die nachfolgend diskutierten bevorzugten Ausführungsformen der Vorrichtung spiegelbildlich auch in dem Verfahren wieder. Die jeweils angegebenen Vorteile des Verfahrens bzw. der Vorrichtung sind spiegelbildlich auch Vorteile der Vorrichtung bzw. des Verfahrens.

Mit Vorteil wird z.B. für das Verfahren vorgeschlagen, dass das Werkstück um 180° um die Drehachse gedreht wird, auch als Wenden bezeichnet. Das Werkstück wird gewisserma-ßen auf den Kopf gestellt. Dies ist z.B. eine häufige Anwendung bei Werkstücken mit offenen Mündungen, die z.B. zunächst mit Mündung noch oben weisend auf ein Handhabungsrad übergeben werden und auf dem Handhabungsrad um 180° gedreht werden, damit die Mündungsöffnung nach unten weist. Auf einem anderen Handhabungsrad kann dann diese Bewegung umgekehrt werden, der Behälter also erneut gewendet werden. Es ist bei solchen Wendevorgängen dann auch vorteilhaft, wenn das Werkstück um 180° um die Halteelementdrehachse gedreht wird. Dies ist häufig erforderlich, um eine Ausrichtung einer Zangenöffnung vorzunehmen, wie einleitend zu den zangenartigen Fixiermitteln erläutert. Für ihre Handhabung weisen Werkstücke, z.B. Behälter, Haltestrukturen auf. Typische Haltestrukturen an Behältern sind z.B. Tragringe, die z.B. auch als Neckringe oder Stützring bezeichnet werden. An diesen Haltestrukturen können die Halteelemente angreifen und so das Werkstück halten. Mit Vorteil wird vorgeschlagen, dass das Halteelement das Werkstück an dessen Haltestruktur hält, z.B. mit Mündung nach oben weisend. Diese Haltestruktur soll im gehaltenen Zustand beabstandet von der Drehachse sein. Erfolgt nun die vorstehend beschriebene Drehung um die Drehachse, z.B. um 180°, so besteht dieser Abstand nunmehr auf der gegenüberliegenden Seite zur Drehachse, sodass insgesamt das Werkstück gewendet und angehoben wurde. Auf diese Weise lassen sich also Höhenanpassungen realisieren. Solche Höhenanpassungen können z.B. erforderlich sein, wenn ein Werkstück von einer ersten Behandlungsvorrichtung kommt, die ein Werkstück auf einer bestimmten Höhe handhabt, und in einer zweiten Behandlungsvorrichtung einer weiteren Behandlung unterzogen werden soll, wobei aber diese zweite Behandlungsvorrichtung eine andere Handhabungshöhe erfordert. Ein erfindungsgemäßes Handhabungsrad könnte in der dargestellten Weise diese Höhenanpassung vornehmen und dazu z.B. zwischen diesen beiden genannten Behandlungsvorrichtungen angeordnet sein oder aber in einer der Behandlungsvorrichtungen integriert sein.

Möglich ist, dass die zum Verfahren beschriebenen beiden Drehungen um die Drehachse und um die Halteelementdrehachse zeitlich nacheinander ausgeführt werden. Vorteilhaft ist aber, dass die Drehung um die Drehachse und die Drehung um die Halteelementdrehachse wenigstens teilweise zeitlich überlappend, bevorzugt vollständig zeitlich überlappend ausgeführt werden. Auf diese Weise wird die gewünschte Handhabung in kürzerer Zeit abgeschlossen, sodass z.B. kürzere Umlaufzeiten auf dem Handhabungsrad und somit höhere Handhabungsleistungen erreichbar sind. Es ist dabei bevorzugt, diese Gleichzeitigkeit durch eine Kopplung dieser beiden Drehbewegungen zu erreichen, weiter bevorzugt durch eine mechanische Kopplung der beiden Drehbewegungen. Gegenüber einer z.B. steuerungstechnischen Kopplung erweist sich eine mechanische Kopplung als stets zuverlässig und einfach in der Umsetzung. Besonders einfach in der Umsetzung und somit bevorzugt ist, dass zwei kämmende Kegelräder die mechanische Kopplung leisten.

Für die Ausführung der genannten Drehungen ist ein Antrieb vorzusehen. Es könnten z.B. hydraulische, pneumatische oder motorische Antriebe vorgesehen sein, z.B. Linearmotoren oder Servomotoren. Mit Vorteil wird allerdings vorgeschlagen, dass die Drehung um die Drehachse und/oder die Drehung um die Halteelementdrehachse kurvengesteuert ausgeführt wird. Kurvensteuerungen haben den Vorteil einer exakten Reproduzierbarkeit der durchgeführten Bewegungen bei großer Kompaktheit. Sie haben gegenüber alternativen Antrieben auch den Vorteil, dass es keiner Versorgungsleitungen bedarf und keine zusätzlichen Einrichtungen auf dem Handhabungsrad anzuordnen sind.

Für den kurvengesteuerten Antrieb wird mit Vorteil vorgeschlagen, dass kurvengesteuert ein Stellelement linear bewegt wird. Diese lineare Bewegung wird dann umgesetzt in eine Drehbewegung um die Drehachse und/oder um die Halteelementdrehachse. Kurvengesteuerte Linearbewegungen sind konstruktiv einfach realisierbar. Die Umsetzung dieser Linearbewegung in eine Drehbewegung kann durch ein Gelenk erfolgen, bevorzugt durch ein Drehgelenk, weiter bevorzugt durch ein dreiarmiges Drehgelenk mit einem feststehenden Drehlager. Die genannten Gelenke sind ebenfalls konstruktiv einfach realisierbar und insbesondere ein dreiarmiges Drehgelenk mit einem feststehenden Drehlager ermöglicht exakt vorgegebene Bewegungsmuster, sodass die exakte Bewegungsvorgabe der Kurvensteuerung in eine exakte Drehbewegung umgewandelt werden kann. Ein weiterer konstruktiver Vorteil ist, dass sowohl eine Kurvensteuerung als auch die genannten Gelenke in einfacher Weise justierbarer sind. In diesem Zusammenhang ist bevorzugt, dass wenigstens ein Arm des Gelenkes in seiner Länge verstellbar ist. Dies stellt einen wesentlichen Vorteil gegenüber alternativen Konstruktionen dar.

Die genannten Handhabungsverfahren könnten als Teilschritt in einem Verfahren zur Behandlung von Werkstücken ausgeführt werden, z.B. um wie geschildert das Werkstück zu wenden, z.B. auf den Kopf zu stellen.

Bezüglich der Vorrichtung wird mit Vorteil vorgeschlagen, dass die Welle bewegungsgekoppelt verbunden ist mit der Drehbewegung um die Halteelementdrehachse. Auf diese Weise lässt sich einfach eine Gleichzeitigkeit der beiden Drehbewegungen erreichen sowie eine koordinierte Bewegung. Besonders bevorzugt ist, dass die Kopplung mechanisch durch zwei kämmende Kegelräder erfolgt, mit dem Vorteil großer Kompaktheit und Stabilität und hoher Kopplungstreue, nachfolgend zur besseren Unterscheidbarkeit als Kegelrad und Kegelritzel bezeichnet. Für die zu koppelnden Drehbewegungen ist von Vorteil, dass die Achsen des Kegelrades und des Kegelritzels um 90° versetzt zueinander angeordnet sind. Eine übersetzungsfreie Bewegungskopplung gelingt dadurch, dass die Zähnezahl des Kegelrades und des Kegelritzels identisch sind. Schließlich ist bevorzugt, dass die Welle als Antriebswelle ausgeführt ist und im Kegelritzel dreht. Der Antrieb lässt sich in einfacherer Weise an der Welle anschließen und die Welle hat die größere Masse zu drehen.

Wie auch schon zum Verfahren erläutert und aus den dort genannten Gründen, ist bevorzugt, dass die Drehbewegung der Welle und/oderdie Drehbewegung um die Halteelementdrehachse von einer Kurvensteuerung angetrieben ist. Hierzu ist eine Verbindung zwischen der Kurvensteuerung und der Welle vorzusehen. Mit Vorteil kann diese Verbindung z.B. als Gelenk ausgeführt sein. Auch dies stellt eine konstruktiv einfache Lösung mit hoher Positionstreue dar. Das Gelenk muss aber nicht unmittelbar an die Kurvensteuerung anschließen, sondern kann auch mittelbar damit verbunden sein.

Aus Gründen der Positioniergenauigkeit ist bevorzugt, dass das Gelenk ein dreiarmiges Gelenk ist, wobei die drei Gelenkarme mit jeweils einem ihrer Enden drehgelenkig an einem gemeinsamen Drehlager angelenkt sind, wobei einer der drei Gelenkarme mit seinem drehlagerabgewandten Ende drehgelenkig an einem von einem Antrieb bewegten Stellelement angelenkt ist. Ein zweiter Gelenkarm ist an seinem drehlagerabgewandten Ende drehgelenkig in einem Abstand zur Welle an einem Drehlager angelenkt, wobei das Drehlager mit der Drehwelle starr verbunden ist, und der dritte Gelenkarm ist mit seinem drehlagerabgewandten Ende drehgelenkig an einem relativ zum Handhabungsrad ortsfest angeordneten Drehlager angelenkt. Durch diesen dritten Gelenkarm ist die Bewegung des gemeinsamen Drehlagers auf einer Teilkreisbahn festgelegt.

Auch aus Gründen der Positionierbarkeit ist bevorzugt, dass eine Kurvensteuerung ein Stellelement bewegt und ein Gelenk, z.B. ein dreiarmiges Gelenk, zwischen diesem Stellelement und der Welle und/oder der Halteelementdrehwelle angeordnet ist. Dies ist ein Beispiel für eine mittelbare Verbindung eines Gelenkes mit einer Kurvensteuerung. Auch das bevorzugte Führen des Stellelementes entlang von Führungsschienen dient dem Zweck exakter Positionierbarkeit.

Eine Verbesserung der Justierbarkeit wird erreicht, indem mindestens einer der Gelenkarme in seiner Armlänge verstellbar ausgeführt ist, wobei dies bevorzugt der am Stellelement angelenkte Gelenkarm ist.

Für die Bewegungskopplung der Drehbewegungen erweist sich als vorteilhaft, dass die Welle drehgelagert in einem jochartigen Lagerkörper gehalten ist, welcher fest oder lösbar positionsstabil mit dem Handhabungsrad verbunden ist. Positionsstabil meint dabei, dass die Verbindung mit dem Handhabungsrad kein Verschwenken, Drehen oder eine sonstige Relativbewegung zwischen Lagerkörper und Handhabungsrad erlaubt. Der Lagerkörper verhält sich, als sei er integral mit dem Handhabungsrad ausgeführt. Jochartig kann auch als U-förmig oder Y-förmig verstanden werden. Vorteilhaft ist, wenn der Lagerkörper lösbar mit dem Handhabungsrad verbunden ist, weil dadurch der Lagerkörper relativ zum Handhabungsrad justiert werden kann, z.B. um eine Justage in der Höhe vorzunehmen. Ein weiterer Vorteil ist, dass der Lagerkörper bedarfsweise ausgetauscht werden kann.

Die Welle ist bevorzugt drehbar in den beiden Jocharmen gelagert, die sich zu beiden Seiten der Jochöffnung U-förmig oder Y-förmig erstrecken, wobei die Halteelementwelle des Halteelements zwischen den beiden Jocharmen in einem Drehlager gelagert ist, also im Bereich der Jochöffnung. Bevorzugt erfolgt dies aus Symmetriegründen mittig zwischen diesen beiden Jocharmen. Für die drehbare Lagerung kann dazu z.B. die Halteelementwelle die Welle quer durchsetzen, z.B. indem sich diese Halteelementwelle durch eine Bohrung in der Welle hindurch erstreckt. Bevorzugt kreuzen sich die Drehachsen der Welle und der Haltelementwelle und stehen senkrecht aufeinander. Die Welle bildet das Drehlager für die Halteelementwelle, z.B. zusammen mit weiteren Elementen, z.B. mit einem das Kegelrad und das Kegelritzel umschließenden Gehäuse. Die Bohrung ist bevorzugt mittig in Längsrichtung der Welle vorgesehen. Die Bohrung übernimmt z.B. die Führung und Lagerung der Halteelementwelle, z.B. unterstützt durch weitere Lager, z.B. unterstützt durch Öffnungen in einem Gehäuse um das Kegelrad und Kegelritzel, die ebenfalls im Bereich der Jochöffnung angeordnet sind.

Wie auch schon zum Verfahren erläutert, und mit dem Vorteil einer möglichen Realisierung von Höhenanpassungen, weist das Halteelement eine Greifstruktur mit einer Greiffläche auf, die in einer Greifebene liegt, wobei diese Greifstruktur mit ihrer Greiffläche mit einer Handhabungsstruktur am Werkstück zusammenwirkt, wobei die Greifebene beabstandet von der Drehachse der Welle angeordnet ist.

Eine erfindungsgemäße Vorrichtung kann z.B. zur Ausübung eines der in den Verfahrensansprüchen angegebenen Verfahren ausgebildet und eingerichtet ist.

Eine bevorzugte Anwendung findet eine erfindungsgemäße Vorrichtung in Behandlungsvorrichtungen zur Behandlung von Werkstücken, insbesondere in Plasmabeschichtungsvorrichtungen. Dabei ist mitunter vorteilhaft, zwei erfindungsgemäße Handhabungsvorrichtungen vorzusehen, um die Wirkung einer ersten Handhabung durch eine zweite Handhabung aufzuheben bzw. rückgängig zu machen.

Die vorliegenden erfindungsgemäßen Verfahren und Vorrichtungen beziehen sich insbesondere und verallgemeinerbar auf behälterartige Werkstücke, noch spezifischer und ebenfalls verallgemeinerbar auf flaschenartige Werkstücke. Insofern wird ohne Beschränkung der Allgemeinheit nachfolgend und in der Figurenbeschreibung nicht der Begriff des Werkstückes verwendet, sondern meist von Behältern oder Flaschen gesprochen, insbesondere sind in den in den Figuren dargestellten Ausführungsbeispielen Flaschen gezeigt. Die vorliegenden erfindungsgemäßen Verfahren und Vorrichtungen beziehen sich dabei insbesondere und verallgemeinerbar auf Werkstücke, Behälter, Flaschen aus Kunststoff, insbesondere aus PET.

Erfindungsgemäße Verfahren und Vorrichtungen können bevorzugt Anwendung finden in diversen Vorrichtungen und Verfahren zur Behandlung von Werkstücken, die in rotierender Bauart ausgeführt sind bzw. in Vorrichtungen rotierender Bauart ausgeführt werden. Die erfindungsgemäßen Verfahren und Vorrichtungen können Bestandteil der entsprechenden Behandlungsvorrichtungen und Behandlungsverfahren sein und die Funktion eines Übergaberades bzw. eines Übergabeschrittes übernehmen und dabei die erfindungsgemäße zusätzliche Positionierung des Werkstückes vornehmen. Übergaberäder werden auch als Transferräder bezeichnet. Insbesondere könnte diese zusätzliche Positionierung darin bestehen, dass das Werkstück um 180° gedreht wird, z.B. könnte ein eine Mündungsöffnung aufweisender Behälter aus einer Positionierung mit Mündungsöffnung nach oben weisend in eine Positionierung mit Mündungsöffnung nach unten weisend überführt werden und umgekehrt. Erfindungsgemäße Vorrichtungen könnten aber z.B. auch in einem Bereich zwischen verschiedenen Behandlungsvorrichtungen angeordnet sein, um zwischen diesen Vorrichtungen eine gewünschte Positionierung des Werkstückes vorzunehmen, z.B. die bereits genannte Überführung der Positionierung des Werkstückes mit Mündungsöffnung nach oben weisend in eine Positionierung mit Mündungsöffnung nach unten weisend. Drehungen um weniger als 180° oder um mehr als 180° sind natürlich auch möglich, z.B. Drehungen um 90° oder um 270°, wobei letzteres einer Drehung um 90° in der umgekehrten Richtung entspricht.

Erfindungsgemäße Verfahren und Vorrichtungen könnten etwa in Vorrichtungen für die Herstellung von blasgeformten Behältern eingesetzt werden, kurz als Blasmaschinen oder als Streckblasmaschinen bezeichnet, um eine Übergabe von geblasenen Behältern oder von Vorformlingen von einer Arbeitsstation zu einer anderen Arbeitsstation mit hoher Übergabegeschwindigkeit durchführen zu können. Beispielsweise könnte ein erfindungsgemä-ßes Handhabungsrad zwischen einem rotierenden Blasrad und einer Ausgabestrecke angeordnet sein oder zwischen einer Heizstrecke für Vorformlinge und dem Blasrad. Derartige Verwendungen sind für Übergaberäder grundsätzlich bekannt, z.B. aus der WO00/48818 A1. Ein aus diesem technischen Bereich bekanntes Übergaberad könnte durch ein erfindungsgemäßes Handhabungsrad ersetzt werden, um eine gewünschte zusätzliche Positionierbewegung zu realisieren.

Erfindungsgemäße Vorrichtungen und Verfahren könnten auch eine Anwendung finden beispielsweise bei Vorrichtungen und Verfahren, in denen die Behandlung ein Befüllen und/oder ein Etikettieren und/oder ein Reinigen und/oder ein Sterilisieren und/oder ein Spülen und/oder ein Verschließen und/oder ein Inspizieren oder dergleichen betrifft. In allen diesen Anwendungen sind Übergaberäder bekannt, die ersetzbar sind durch ein erfindungsgemäßes Handhabungsrad.

Erfindungsgemäße Verfahren und Vorrichtungen könnten eine weitere Anwendung finden beispielsweise bei Behandlungsprozessen, um Kunststoffe mit Oberflächenbeschichtungen zu versehen. Insbesondere sind auch bereits Behandlungsprozesse bekannt, um innere oder äußere Oberflächen von Behältern zu beschichten, die zur Verpackung von Flüssigkeiten vorgesehen sind. Darüber hinaus sind Behandlungsprozesse zur Plasmasterilisation bekannt. Die WO 95/22413 A1 beschreibt z.B. Plasmabeschichtungsvorrichtungen und -verfahren für Kunststoffbehälter. Auch die EP 1010773 A1 zeigt Plasmabeschichtungsvorrichtungen und -verfahren, so wie auch die WO 03/100121 A2 und die WO 03/100125 A1. Beispielsweise könnte ein erfindungsgemäßes Handhabungsrad zwischen einem rotierenden Plasmarad und einer Ausgabestrecke angeordnet sein oder zwischen einem Eingaberad und dem Plasmarad. Derartige Verwendungen von Übergaberädern sind grundsätzlich bekannt aus den oben angegeben Dokumenten, ein dort gezeigtes Übergaberad könnte durch ein erfindungsgemäßes Handhabungsrad ersetzt werden, um eine gewünschte zusätzliche Positionierbewegung zu realisieren.

Die erfindungsgemäßen Verfahren und Vorrichtungen finden eine bevorzugte Anwendung bei diesen an sich bekannten Plasmabeschichtungsverfahren und Plasmabeschichtungsvorrichtungen. Dort werden z.B. zur Verbesserung von Barriereeigenschaften eines thermoplastischen Kunststoffmaterials eines Behälters durch das Plasma erzeugte Behälterschichten aus Siliziumoxiden mit der allgemeinen chemischen Formel SiOx verwendet. Zusätzlich können in den hierdurch erzeugten Barriereschichten auch Anteile von Kohlenstoff, Wasserstoff und Stickstoff enthalten sein. Derartige Barriereschichten verhindern ein Eindringen von Sauerstoff in die verpackten Flüssigkeiten sowie ein Austreten von Kohlendioxid bei CO2-haltigen Flüssigkeiten.

Nachfolgend soll die Erfindung anhand von Ausführungsbeispielen näher erläutert werden, die in den Figuren dargestellt sind. Es zeigen:
- Fig. 1: eine schematische Aufsicht auf eine Beschichtungsvorrichtung, wie sie im Grundaufbau und grundsätzlich im Stand der Technik bekannt ist;
- Fig. 2: eine perspektivische Ansicht auf eine Wendeeinrichtung als Beispiel für eine Handhabungsvorrichtung, wobei am Umfang eines Wenderades exemplarisch drei Wendestationen angeordnet sind, die unterschiedliche Stadien des Wendevorganges repräsentieren;
- Fig. 3a -3c: die in Figur 2 exemplarisch gezeigten Wendestationen in einer vergrößerten Ansicht und in einer anderen Perspektive, wobei in der mittleren Figur 3b aus Gründen der Übersichtlichkeit das Haltemittel teilweise und die davon gehaltene Flasche vollständig weggelassen ist. Die Figuren 3a-3c zeigen Momentaufnahmen eines Wendevorganges.

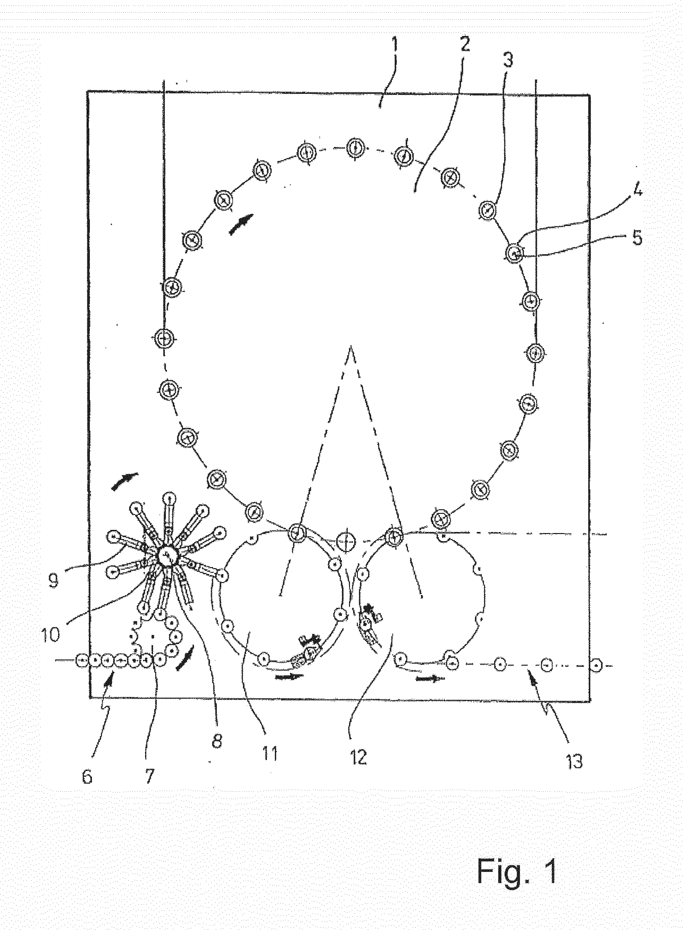

Aus der Darstellung in Fig. 1 ist eine Plasmabeschichtungsvorrichtung (1) zu erkennen, die mit einem rotierenden Plasmarad (2) versehen ist. Entlang eines Umfanges des Plasmarades (2) sind eine Mehrzahl von Plasmastationen (3) angeordnet. Die Plasmastationen (3) sind mit Plasmakammern (4) bzw. Kavitäten zur Aufnahme von zu behandelnden Werkstücken (5) versehen. Solche Werkstücke (5) können z.B. Behälter aus Kunststoff sein, z.B. Flaschen aus Kunststoff, z.B. Flaschen aus PET. Die zu behandelnden Werkstücke (5) werden der Plasmabeschichtungsvorrichtung (1) im Bereich einer Eingabe (6) zugeführt und über ein Vereinzelungsrad (7) an ein Übergaberad (8) weitergeleitet, das mit positionierbaren Tragarmen (9) ausgestattet ist. Die Tragarme (9) sind relativ zu einem Sockel (10) des Übergaberades (8) verschwenkbar angeordnet, so daß eine Abstandsveränderung der Werkstücke (5) relativ zueinander durchgeführt werden kann. Hierdurch erfolgt eine Übergabe der Werkstücke (5) vom Übergaberad (8) an ein Eingaberad (11) mit einem relativ zum Vereinzelungsrad (7) vergrößerten Abstand der Werkstücke (5) relativ zueinander. Das Eingaberad (11) übergibt die zu behandelnden Werkstücke (5) an das Plasmarad (2). Nach einer Durchführung der Behandlung werden die behandelten Werkstücke (5) von einem Ausgaberad (12) aus dem Bereich des Plasmarades (2) entfernt und in den Bereich einer Ausgabestrecke (13) überführt.

Eine detailliertere Beschreibung, wie diese in Fig. 1 lediglich in prinzipienhafter Art dargestellte Plasmabeschichtungsvorrichtung (1) ausgeführt sein kann und wie z.B. eine Plasmastation (3) in größerer Detailliertheit aussehen kann, findet sich z.B. in bereits in der Beschreibungseinleitung genannten Dokumenten des Standes der Technik, z.B. in der WO 03/100121 A2 oder in der WO 03/100125 A1. Insofern kann an dieser Stelle auf eine weitere Detailbeschreibung verzichtet werden. Stattdessen wird auf die dortigen Figuren 1-14 bzw. 1-10 verwiesen und auf die entsprechenden Figurenbeschreibungen. Insbesondere wird auf die Figuren 4ff der WO 03/100125 A1 bzw. Fig. 1-3 der WO 03/100121 A2 mit Darstellung von Plasmastationen und Plasmakammern verwiesen. Die dort dargestellten Stationen weisen Doppelkavitäten auf. Die vorliegende Erfindung ist aber nicht beschränkt auf eine bestimmte Zahl der Kavitäten und unabhängig vom konkreten Aussehen der Plasmastationen und der Beschichtungsvorrichtung.

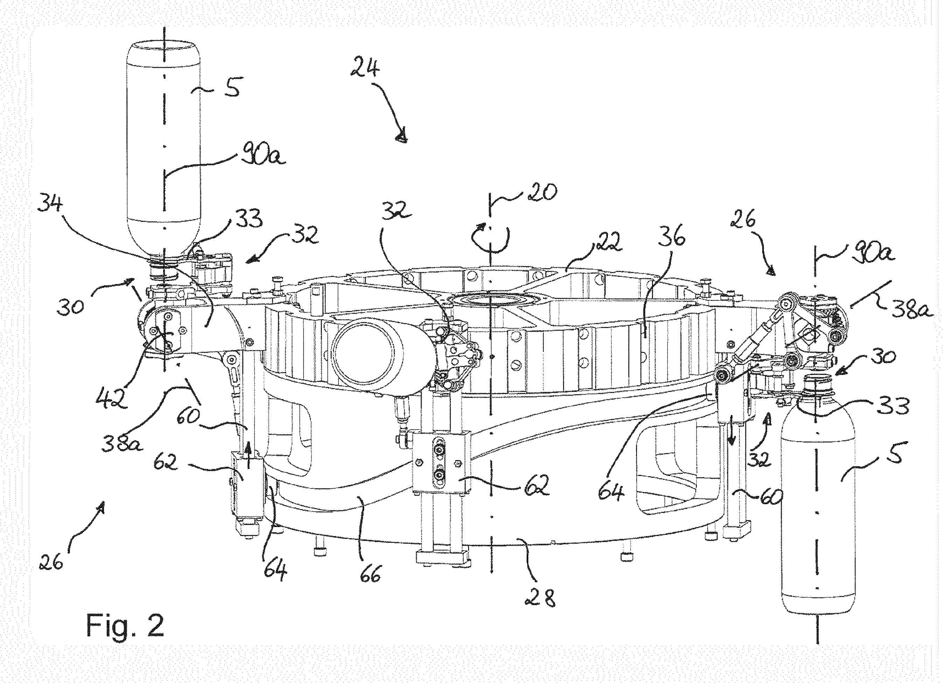

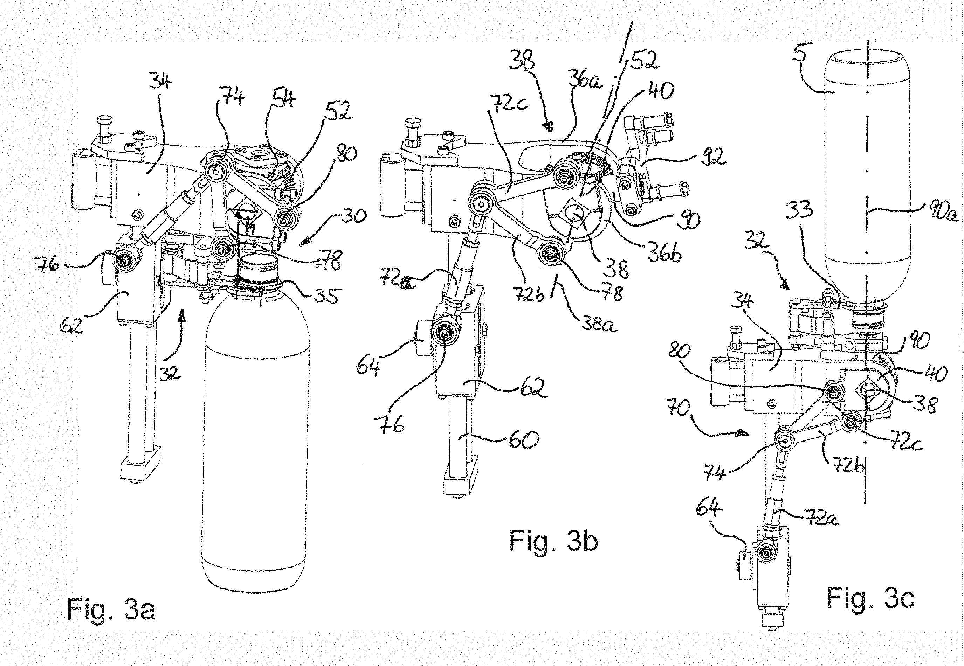

Die bisher beschriebene Plasmabeschichtungsvorrichtung (1) entspricht dem bekannten Stand der Technik, z.B. der WO 03/100125 A1 oder der WO 03/100121 A2. Das Übergaberad (8), das Eingaberad (11) oder das Ausgaberad (12) könnten z.B. als erfindungsgemäße Handhabungsräder (22) ausgeführt sein, insbesondere könnten sowohl das Eingaberad (11) und das Ausgaberad (12) erfindungsgemäß ausgeführt werden, um z.B. ein Wenden der einlaufenden Flasche an der Position des Eingaberates (11) vorzunehmen und ein erneutes Wenden zurück in die Ausgangsposition an der Position des Ausgaberades (12) vorzunehmen. Entsprechende Wenderäder (22) werden nachfolgend als Beispiele für erfindungsgemäße Verfahren und Vorrichtungen erläutert. Dabei zeigt Figur 2 eine perspektivische Ansicht auf eine Wendevorrichtung (24) für Flaschen (5) als Beispiel für eine Handhabungsvorrichtung für Werkstücke. Fig. 2 wird nachfolgend gemeinsam mit den Figuren 3a bis 3c beschrieben, da die Fig. 3a -3c die in Figur 2 exemplarisch gezeigten Wendestationen (26) in einer vergrößerten Ansicht und in einer anderen Perspektive zeigen, wobei in der mittleren Figur 3b aus Gründen der Übersichtlichkeit das Halteelement (32) teilweise und die davon gehaltene Flasche (5) vollständig weggelassen ist. Die Figuren 3a-3c zeigen Momentaufnahmen eines Wendevorganges.

Das in Fig. 2 gezeigte Wenderad (22) ist relativ zu einer Rotationsache (20) rotationsfähig in einem Sockel (28) gelagert. Das Wenderad (22) ist wesentliches Element einer Wendevorrichtung (24), zu der weitere Elemente gehören, die in Figur 2 nicht dargestellt sind, z.B. sind ein Lager und eine Welle für die rotationsfähige Lagerung des Wenderades (22) nicht dargestellt, sondern im Zentrum des Wenderades (22) bzw. Sockels (28) lediglich angedeutet. Auch ein Rotationsantrieb ist nicht dargestellt.

Von dem Wenderad (22) werden während des rotierenden Umlaufs um die Rotationsachse (20) Flaschen (5) gewendet. Dabei sollen die Flaschen (5) wie auf der rechten Seite der Fig. 2 dargestellt, siehe auch zugehörige Figur 3a, mit Mündungsöffnung (30) nach oben weisend dem Wenderad (22) zugeführt und auf eine Wendestation (26) übergeben werden. In der gegenüberliegenden Wendestation (26), die auf der linken Seite der Fig. 2 dargestellt ist, siehe auch zugehörige Figur 3c, ist die Flasche (5) um 180° gedreht, also gewendet, sodass die Flasche (5) nunmehr mit der Mündungsöffnung (30) nach unten weisend gehalten ist. In dieser gewendeten Positionierung wird die Flasche (5) in dem auf der linken Seite der Fig. 2 dargestellten Bereich vom Wenderad (22) entnommen und einer weiteren Verwendung zugeführt. In nicht dargestellter Weise geht die umlaufende Wendestation (26) auf dem rückseitigen Umlaufweg um den Sockel (28) zurück in die auf der rechten Seite von Figur 2 dargestellte Ausgangsstellung und kann dann erneut eine Flasche (5) aufnehmen. Dieses Aufnehmen einer Flasche (5), Wenden der Flasche (5), Entnehmen der gewendeten Flasche (5) und der flaschenlose weitere Umlauf mit Rückbewegung der Wendestation (26) in die Ausgangsposition wiederholt sich periodisch mit der Umlauffrequenz der Rotationsbewegung des Wenderades (22) um den Sockel (28) bzw. um die Rotationsachse (20).

Am Umfang des Wenderades (22) sind in Fig. 2 rein beispielhaft drei Wendestationen (26) angeordnet, die unterschiedliche Stadien eines Wendevorganges repräsentieren. In den dazwischenliegenden Bereichen und insbesondere auch auf der rückwärtigen Seite des Wenderades (22) können weitere Wendestationen (26) angeordnet werden und bei einer praktischen Verwendung dieses Wenderades (22) würden dort auch weitere Wendestationen (26) angeordnet sein, um hohe Handhabungsleistungen zu erreichen. Auf eine Darstellung weiterer Wendestationen (26) wurde lediglich aus Gründen der Erkennbarkeit technischer Details verzichtet.

Die außenseitig am Wenderad (22) angeordneten Wendestationen (26) sind mit Halteelementen (32) für die Flaschen (5) versehen. Beim dargestellten Ausführungsbeispiel beaufschlagen die Halteelemente (32) die Flaschen (5) im Bereich des Mündungsabschnittes (30) unterhalb eines Stützringes (35). Die Halteelemente (32) rotieren also zusammen mit den davon gehaltenen Flaschen (5) um die Rotationsachse (20). Dies stellt eine erste Positionierungsbewegung dar. Zur besseren Unterscheidung gegenüber anderen Positionierungsbewegungen wird der Begriff der Rotationsachse lediglich benutzt für das Wenderad (22), verallgemeinernd für das Handhabungsrad, während für andere Drehbewegungen von Drehachsen gesprochen werden wird. Dies entspricht der Verwendung dieser Begriffe in der allgemeinen Beschreibung und in den Ansprüchen.

Das Halteelement (32) ist nicht unmittelbar am Wenderad (22) angeordnet, sondern zur Realisierung derweiteren gewünschten Positionierbewegungen und zur Realisierung einer präzisen Bewegungsausführung, weist die Wendestation (26) weitere Einrichtungen auf, die nachfolgend in Aufbau und Funktion beschrieben werden.

Jede Wendestation (26) weist einen Hauptkörper (34) auf, der lösbar und insbesondere höhenverstellbar am Außenumfang des Wenderades (22) befestigt ist. Umfangsverteilt und in äquidistanter Weise umfangswinkelversetzt ragen diese Hauptkörper (34) in radialer Richtung des Wenderades (22) nach außen. Beispielsweise könnten 24 jeweils zu einer Wendestation (26) gehörende Hauptkörper (34) umfangsverteilt am Wenderad (22) angeordnet sein. Zur Erleichterung dieser Anordnung weist das Wenderad (22) Montagekonturen (36) auf, zu denen formkomplementäre Gegenkonturen am Hauptkörper (34) vorgesehen sind. Die Befestigung kann z.B. durch Verschraubung erfolgen.

Wie in Figur 3b in der dortigen schrägen Aufsicht besser erkennbar, weist dieser Hauptkörper (34) von oben betrachtet eine jochförmige Grundkontur auf. Diese Grundkontur ließe sich passend auch beschreiben als U-förmige oder Y-förmige Grundkontur. Radial außenliegend geht der zunächst klotzförmige Hauptkörper (34) über in zwei in Umfangsrichtung des Wenderades (22) gegenüberliegende Schenkel (36a, 36b), zwischen denen sich die Jochöffnung (38) erstreckt. Innerhalb dieser Jochöffnung (38) erstreckt sich zwischen den beiden Schenkeln (36a, 36b) eine Welle (38), die auf der einen Seite in Schenkel (36b) und auf der anderen Seite in Schenkel (36b) drehbar gelagert ist. Insofern kann der Hauptkörper (34) auch als Lagerkörper bezeichnet werden. Die Welle (38) ist an ihren beiden Enden außenseitig von den Schenkeln (36a) und (36b) durch Wellenflansche (40, 42) gesichert. Der in den Figuren 3a-3c sichtbare Wellenflansch (40) ist mit der Welle (38) mitdrehend ausgeführt, also starr mit der Welle (38) verbunden, während der in der linken Wendestation (26) der Figur 2 erkennbare Wellenflansch (42) fest mit dem Hauptkörper (34) verschraubt ist, sodass die Welle (38) sich gegenüber diesem feststehenden Wellenflansch (42) dreht. Weiterhin dreht die Welle (38) sich mit ihrem dem feststehenden Wellenflansch (42) zugewandten Endbereich in einem Kegelritzel (52), das im Bereich der Jochöffnung (38) starr innenseitig am Schenkel 36a befestigt ist, und das mit einem später noch beschriebenen Kegelrad (54) kämmt.

Vom Hauptkörper (34) aus erstrecken sich in vertikaler Richtung nach unten zwei Führungsstangen (60). Diese Führungsstangen (60) dienen der beweglichen Führung eines Stellelementes (62), das auf seiner wenderadzugewandten Seite eine Kurvenrolle (64) trägt. Jede der Wendestationen (26) weist ein entsprechendes Stellelement (62) mit Kurvenrolle (64) auf. Diese Kurvenrollen (64) greifen in eine Kurvenbahn (66) ein, die in Fig. 2 zu sehen ist, und die als Mantelkurve außenseitig am Sockel (28) angeordnet ist. Beim dargestellten Ausführungsbeispiel bewegen die Kurvenrollen (64) jeweils das Stellelement (62) in einer vertikalen Richtung entlang der Führungsstangen (60). Das Stellelement (62) ist mit einem Kopplungselement (70) verbunden, das im gezeigten Beispiel als 3-armiges Stangengelenk ausgeführt ist. Die Gelenkarme (72a, 72b, 72c) weisen jeweils zwei Armenden auf und sie sind drehgelenkig miteinander verbunden. Von jedem der drei Gelenkarme (72a, 72b, 72c) ist jeweils eines der Armenden drehgelenkig an einem gemeinsamen Drehlager (74) angelenkt. Die jeweils anderen, nicht am gemeinsamen Drehlager (74) angelenkten Armenden, sind an weiteren, jeweils verschiedenen Drehlagern wie folgt angelenkt. Gelenkarm (72a) ist außenseitig am Stellelement (62) an einem dort befestigten Drehlager (76) drehgelenkig angelenkt. Der Gelenkarm (72a) erstreckt sich also vom Stellelement (62) bis zum gemeinsamen Drehlager (74). Der zweite Gelenkarm (72b) erstreckt sich vom gemeinsamen Drehlager (74) bis zu einem Drehlager (78), das am Hauptkörper (34), genauer gesagt am Schenkel (36b), angeordnet ist, d. h. das nicht am gemeinsamen Drehlager (74) angelenkte Armende ist an diesem fest mit dem Hauptkörper (34) verbundenen Drehlager (78) drehgelenkig angelenkt. Schließlich ist das nicht am gemeinsamen Drehlager (74) angelenkte Armende des dritten Gelenkarmes (72c) an einem weiteren Drehlager (80) drehgelenkig angelenkt, wobei dieses Drehlager (80) außenseitig am mit der Welle (38) mitdrehenden Wellenflansch (40) angeordnet ist. Zwischen diesem Drehlager (80) und der Welle (38) besteht ein Abstand, der eine Hebellänge darstellt. Zum Zwecke der Vergrößerung dieser Hebellänge weist der Wellenflansch (40) in dieser Hebellängenrichtung einen Flanschfortsatz auf, in dem das Drehlager (80) angeordnet ist. Die beschriebenen Drehlager (76, 78, 80 und 74) sind alle auf der gleichen Seite der Wendestation (26) angeordnet.

Eine lineare Hubbewegung des Stellelementes (62), angetrieben durch die rotierende Bewegung des Wenderades (22) und die Zwangsführung der Kurvenrolle (64) in der beidseitig führenden Kurvenbahn (66), wird über das beschriebene Kopplungselement (70) in eine Drehbewegung der Welle (38) transformiert. Eine Aufwärtsbewegung des Stellelementes (62) führt über den am Stellelement (62) angelenkten Gelenkarm (72a) zu einer Schubbewegung in Richtung auf das gemeinsame Drehlager (74). Dieses gemeinsame Drehlager (74) ist durch Gelenkarm (72b) auf einen festen Abstand zu dem Drehlager (78) am Hauptkörper (34) festgelegt. Das gemeinsame Drehgelenk (74) wird also von Gelenkarm (72a) und geführt von Gelenkarm (72b) auf einer teilkreisförmigen Bahn um das feststehende Drehlager (78) herum nach oben in schiebender Weise ausgelenkt. Der dritte Gelenkarm (72c) nimmt diese Schubbewegung auf und überträgt diese auf das am Wellenflansch (40) angeordnete Drehlager (80), sodass dieses Drehlager (80) um die Drehachse (38a) der Welle (38) herumschwenkt. Der Wellenflansch (40) ist drehfest mit der Welle (38) verbunden, sodass im Ergebnis also die Welle (38) um ihre Drehachse (38a) gedreht wird.

Sobald die Kurvenrolle (64) eine höchste Position in der Kurvenbahn (66) erreicht hat, endet die lineare Aufwärtsbewegung des Stellelementes (62) und die Schubkraftausübung des Stangengelenkes (70) endet, sodass das Schwenken des Drehlagers (80) um die Drehachse (38a) herum ebenfalls endet. Sobald die Kurvenrolle (64) in der Kurvenbahn (66) in vertikaler Richtung wieder nach unten geführt wird, führt der am Stellelement (62) angelenkte Gelenkarm (72a) eine Zugbewegung aus. Analog wie zur Schubbewegung ausgeführt, führt dies zu einem Verschwenken des Drehlagers (80) um die Drehachse (38a) herum in die umgekehrte Richtung, bis die Kurvenrolle (64) eine niedrigste Position in der Kurvenbahn (66) erreicht. Figur 3a zeigt die Position der Kurvenrolle (64) und des Stellelementes (62), wenn der höchste Punkt in der Kurvenbahn (66) erreicht ist, während Figur 3c die entgegengesetzte Position der Kurvenrolle (64) und des Stellelementes (62) zeigt, nämlich wenn der niedrigste Punkt in der Kurvenbahn (66) erreicht ist. Figur 3b zeigt eine Zwischenposition.

Insbesondere ist daran gedacht, das Kopplungselement (70) und die drei Gelenkarme (72a, 72b, 72c) so auszuwählen und zu Justieren, dass ein maximal durchführbarer Hub der Kurvenrolle (64) in eine Drehung der Welle (38) um 180° transformiert wird. Die Auf- und Abbewegung der Kurvenrolle (64) wird hierdurch in eine Schwenkbewegung der Welle (38) um 180° sowie in eine entsprechende Rückbewegung umgesetzt. Der Antrieb für diese Bewegung und die Positionssteuerung ist dabei konstruktiv einfach realisiert, da beides von der außenseitig an dem Sockel (28) des Wenderades (22) positionierten Steuerkurve (66) gesteuert wird.

Für eine Justage ist vorteilhaft, wenn die Länge wenigstens eines der Gelenkarme (70a, 70b, 70c) veränderbar ist. Im dargestellten Ausführungsbeispiel ist bevorzugt vorgesehen, insbesondere in der Figur 3a gut erkennbar, dass der am Stellelement (62) angelenkte Gelenkarm (70a) über Einstellmuttern in der Länge veränderlich ist. Eine zusätzliche Justagemöglichkeit eröffnet sich, wenn z.B. die Lage des feststehenden Drehlagers (78) veränderlich ausgeführt wird und/oder die Position der Kurvenrolle (64) am Stellelement (62) veränderlich ist. Weitere oder alternative Justagemöglichkeiten können realisiert sein.

Die geschilderte Schwenkbewegung der Welle (38) ist eine zweite Drehbewegung, die zu der Rotationsbewegung um die Rotationsachse (20) hinzutritt. Die Drehachse (38a) der Welle (38) steht im dargestellten Ausführungsbeispiel in tangentialer Richtung des Wenderades (22). Dies wird zwar als vorteilhaft und bevorzugt angesehen, ist aber nicht zwingend notwendig. So könnte der Hauptkörper (34) z.B. auch um einen Winkel gegenüber der radialen Richtung verkippt nach außen vom Wenderad (22) abstehen, in Rotationsrichtung oder entgegen der Rotationsrichtung des Rades, wodurch dann die Welle (38) und deren Drehachse (38a) nicht tangential ausgerichtet wären, sondern schrägstehend, sprich sowohl mit einer Projektionskomponente auf die radiale als auch auf die tangentiale Richtung des Wenderades (22). Auch dies führt zu technisch sinnvollen und technisch vorteilhaften Vorrichtungen und Verfahren.

Die Flaschen (5) werden wie eingangs ausgeführt und wie in den Figuren 2, 3a und 3c dargestellt, von einem Halteelement (32) gehalten. Dieses Halteelement (32) ist so angeordnet und gelagert, dass es die Drehbewegung der Welle (38) mitvollzieht. Eine Drehung der Welle (38) um deren Drehachse (38a) um 180° verschwenkt auch das Halteelement (32) und die davon gehaltene Flasche (5) um 180°. Das Halteelement (32) hält dabei bevorzugt die Flasche (5) in einem Abstand zur Drehachse (38a), weil sich wegen dieses Abstandes und mit der erläuterten Schwenkbewegung um die Drehachse (38a) ein Höhenausgleich erreichen lässt.

Die Handhabung der Flaschen (5) erfolgt wie eingangs erwähnt, indem die Halteelemente (32) die Flaschen z.B. unterhalb des Stützringes (35) mit einer Haltekraft beaufschlagen. Die Unterseite des Stützrings (35) definiert also eine Handhabungshöhe. Diese Handhabungshöhe ist bei vielen Bearbeitungsvorrichtungen vorgegeben, weil der Einsatz der meisten Handhabungseinrichtungen wie z.B. Zangen oder Dorne erforderlich macht, dass z.B. der Stützring (35) stets auf einer bestimmten Höhe ist. Diese Handhabungshöhe kann durchaus unterschiedlich sein bei unterschiedlichen Bearbeitungsvorrichtungen. Der Vergleich der Figuren 3a und 3c ergibt, dass die Handhabungshöhe, definiert z.B. durch die Höhe der Unterkante des Stützringes (35), vor dem Wendevorgang unterhalb der Höhe der Drehachse (38a) liegt, nämlich mit einem Höhenabstand (h). Nach dem Wendevorgang, zu sehen in Figur 3c, befindet sich der Stützring (35) oberhalb der Höhe der Drehachse (38a), nämlich erneut mit einem Höhenabstand (h). Insgesamt wurde also eine Höhendifferenz von 2h hergestellt. Entsprechend und verallgemeinerbar kann also ein erfindungsgemäßes Handhabungsrad für einen Ausgleich unterschiedlicher Handhabungshöhen in unterschiedlichen Behandlungsvorrichtungen eingesetzt werden.

Der Vergleich der Figuren 3a und 3c verdeutlicht aber auch, dass eine Drehbewegung der Halteelemente (32) um die Drehachse (38a) zu Übergabeproblemen führen kann. Die zangenartigen Fixierelemente (33) der Halteelemente (32) und die sich dazwischen erstreckende Zangenöffnung weist vor dem Wendevorgang, nämlich in Figur 3a, radial nach au-ßen. Dies ist bei zangenartigen Fixierelementen (33) gewünscht, damit eine Flasche (5) von radial außen, z.B. von einem benachbarten Übergaberad, in die zangenartigen Fixierelemente (33) hinein übergeben werden kann. Ein reines Verschwenken der Halteelemente (32) um die Drehachse (38a) um 180° würde einerseits dazu führen, dass die Flasche (5) auf den Kopf gestellt wird, andererseits aber auch dazu, dass die Zangenöffnung radial nach innen weist. Ein Entnehmen der auf dem Kopf stehenden Flasche (5) wäre dann nur nach radial innen möglich und nicht radial nach außen, wie in aller Regel gewünscht. Aus diesem Grunde ist erfindungsgemäß vorgesehen, dass eine dritte Drehbewegung ausgeführt wird, z.B. und bevorzugt, um die Zangenöffnung wieder radial nach außen weisend auszurichten und dadurch ein Entnehmen der Flasche (5) aus den zangenartigen Fixierelemente (33) zu ermöglichen, z.B. für eine Übergabe auf ein benachbartes Übergaberad oder in eine Bearbeitungsstation hinein.

Das geschilderte Problem existiert auch bei Drehungen um die Welle (38) um weniger als 180°, sodass die erfindungsgemäße dritte Drehbewegung auch für andere Drehwinkel, z.B. deutlich kleinere, vorteilhaft ist. Das Problem resultiert im Übrigen aus dem Herauskippen der Drehachse (38a) heraus aus der radialen Richtung des Handhabungsrades (22), z.B. in tangentialer Richtung dieses Rades (22), mindestens aber mit einer tangentialen Komponente. Die Existenz dieser tangentialen Komponente führt zu einer Änderung der Ausrichtung der Zangenöffnung beim Schwenken um Drehachse (38a).

Im dargestellten Ausführungsbeispiel wird diese erfindungsgemäß geforderte dritte Drehung erreicht, indem eine Halteelementwelle (90) vorgesehen ist, auf der das schon erwähnte Kegelrad (54) starr sitzt. Die Halteelementwelle (90) durchsetzt die Welle (38), um deren Drehachse (38a) die zuvor beschriebene Drehbewegung und somit der Wendevorgang der Flasche (5) erfolgt. An einem Ende der Halteelementwelle (90) ist starr das Kegelrad (54) angeordnet, das mit dem Kegelritzel (52) kämmt. Am anderen Ende der Halteelementwelle (90) ist starr ein Fixierelementträger (92) angeordnet, an dem die schon erwähnten zangenartigen Fixierelemente (33) angeordnet sind, wie sie grundsätzlich aus dem Stand der Technik bekannt sind, z.B. aus dem gattungsbildenden Stand der Technik. Die zangenartigen Fixierelemente (33) können aktiv ausgeführt sein oder sie können passiv bewegt sein, wobei letzteres bedeutet, dass sich die zangenartigen Fixierelemente (33) z.B. durch Hineinbewegen oder Herausbewegen der Flaschen (5) öffnen und schließen, und z.B. von einer Federkraft in Richtung Schließstellung beaufschlagt sind und gegen diese Federkraft öffnen. Die Halteelementwelle (90) ist drehbar innerhalb der Welle (38) gelagert. Dreht sich die Welle (38) um Drehachse (38a), so dreht sich die Halteelementwelle (90) in der gleichen Weise mit um die Drehachse (38a). Das Kegelritzel (52) dreht nicht mit der Welle (38), sondern die Welle (38) ist z.B. drehbar darin gelagert, sodass das an diesem Kegelritzel (52) aufgrund der Drehung der Welle (38) entlang geführte und mit dem Kegelritzel kämmende Kegelrad (54) in Drehung versetzt wird. Das Kegelrad (54) sitzt starr auf der Halteelementwelle (90), sodass die Halteelementwelle (90) um eine Drehachse (90a) in Drehung versetzt wird, die mit der Längsachse der Halteelementwelle (90) zusammenfällt. Entsprechend dreht sich auch der Fixierelementträger (92) und die daran befestigten zangenartigen Fixierelemente (33) um diese Drehachse (90a). Wenn diese zangenartigen Fixierelemente (33) die Flasche (5) so halten, dass die Flaschenachse und die Drehachse (90a) deckungsgleich sind, dreht sich die Flasche (5) um sich selbst und auch die Zangenöffnung dreht sich um sich selbst.

Die Drehachse (38a) und die Drehachse (90a) stehen senkrecht zueinander. Auch die Achsen des Kegelrades (54) und des Kegelritzels (52) stehen senkrecht aufeinander. Sowohl das Kegelrad (54) als auch das Kegelritzel (52) sind bevorzugt Kegel mit einem Kegelwinkel von 45°. Da ein Übersetzungsverhältnis von 1 als bevorzugt angesehen wird, ist auch die Zähnezahl von Kegelrad (54) und Kegelritzel (52) gleich. Um vor dem Wendevorgang und nach dem Wendevorgang die Flasche (5) zentrisch in tangentialer Richtung und zentrisch in radialer Richtung oberhalb bzw. unterhalb der Welle (38) zu positionieren, schneiden sich die beiden Drehachsen (38a) und (90a) bevorzugt mittig zwischen den beiden Schenkeln 36a und 36b.

Zusammengefasst findet im dargestellten Ausführungsbeispiel eine erste Drehung und eine erste Positionierbewegung um die Rotationsachse (20) statt. Eine zweite Drehung und eine zweite Positionierbewegung findet um die Drehachse (38a) und die Welle (38) statt. Eine dritte Drehung und eine dritte Positionierbewegung findet um die Drehachse 90a und die Halteelementwelle (90) statt.

## Patentansprüche

1. Verfahren zur Handhabung von Werkstücken (5), wobei Werkstücke (5) von einem um eine Rotationsachse (20) rotierenden Handhabungsrad (22) transportiert werden, an dem umfangsbeabstandet mehrere Handhabungseinrichtungen (26) angeordnet werden, die jeweils mindestens ein Halteelement (32) zum Halten von mindestens einem Werkstück (5) aufweisen, wobei das mindestens eine Werkstück (5) dabei mindestens zeitweilig von dem Halteelement (32) positioniert wird, wobei diese Positionierung sowohl eine Drehbewegung relativ zu der Rotationsachse (20) des Handhabungsrades (22) als auch eine Drehbewegung relativ zu einer quer zur Rotationsachse (20) des Handhabungsrades (22) verlaufenden Drehachse (38a) umfaßt, wobei die Rotationsachse (20) des Handhabungsrades (22) bevorzugt in vertikaler Richtung stehend angeordnet wird, und die quer dazu stehende Drehachse (38a) also bevorzugt in einer horizontalen Ebene liegend angeordnet wird, **dadurch gekennzeichnet, dass** die Drehachse (38a) wenigstens teilweise aus einer radialen in die tangentiale Richtung gekippt wird, sodass sie entweder schräg zur radialen Richtung des Handhabungsrades (22) weisend, bevorzugt im Wesentlichen in tangentialer Richtung des Handhabungsrades (22) weisend, weiter bevorzugt in tangentialer Richtung des Handhabungsrades (22) weisend angeordnet wird, wobei das Halteelement (32) mit dem davon gehaltenen Werkstück (5) um diese Drehachse (38a) gedreht wird, wobei das Halteelement (32) zusätzlich relativ zu dieser Drehachse (38a) um eine quer dazu stehende Halteelementdrehachse (90a) gedreht wird, wobei diese Halteelementdrehachse (90a) zusammenfallend mit der Längsachse des vom Halteelement (32) gehaltenen Werkstückes (5) gewählt ist.

2. Verfahren nach Anspruch 1, **dadurch gekennzeichnet, dass** das Werkstück (5) um 180° um die Drehachse (38a) gedreht wird und/oder um 180° um die Halteelementdrehachse (90a) gedreht wird.

3. Verfahren nach Anspruch 1 oder 2, **dadurch gekennzeichnet, dass** das Halteelement (32) das Werkstück (5) an dessen Haltestruktur (35) hält und diese Haltestruktur (35) ist im gehaltenen Zustand beabstandet von der Drehachse (38a).

4. Verfahren nach einem der vorhergehenden Ansprüche, **dadurch gekennzeichnet, dass** die Drehung um die Drehachse (38a) und die Drehung um die Halteelementdrehachse (90a) wenigstens teilweise zeitlich überlappend, bevorzugt vollständig zeitlich überlappend ausgeführt werden, bevorzugt durch eine Kopplung dieser beiden Drehbewegungen, bevorzugt durch eine mechanische Kopplung dieser beiden Drehbewegungen, weiter bevorzugt durch zwei kämmende Kegelräder (52, 54) gekoppelt.

5. Verfahren nach einem der vorhergehenden Ansprüche, **dadurch gekennzeichnet, dass** die Drehung um die Drehachse (38a) und/oder die Drehung um die Halteelementdrehachse (90a) kurvengesteuert ausgeführt wird, wobei bevorzugt ist, dass kurvengesteuert ein Stellelement (62) linear bewegt wird und dass diese lineare Bewegung in eine Drehbewegung um die Drehachse (30a) und/oder um die Halteelementdrehachse (90a) umgesetzt wird durch ein Gelenk (70), bevorzugt durch ein Drehgelenk, weiter bevorzugt durch dreiarmiges Drehgelenk mit einem feststehenden Gelenklager (78).

6. Verfahren nach Anspruch 5, **dadurch gekennzeichnet, dass** wenigstens ein Arm (72a) des Gelenkes (70) in seiner Länge verstellbar ist.

7. Verfahren zur Behandlung von Werkstücken (5), **gekennzeichnet durch** ein Handhabungsverfahren nach einem der vorhergehenden Ansprüche.

8. Vorrichtung (24) zur Handhabung von Werkstücken (5), mit einem um eine Rotationsachse (20) rotierbar gelagerten Handhabungsrad (22), an dem umfangsbeabstandet mehrere Handhabungseinrichtungen (26) angeordnet sind, die jeweils mindestens ein Halteelement (32) zum Halten von mindestens einem Werkstück (5) aufweisen, wobei das mindestens eine Werkstück (5) dabei mindestens zeitweilig von einem Halteelement (32) positioniert wird, wobei diese Positionierung sowohl eine Drehbewegung relativ zu der Rotationsachse (20) des Handhabungsrades (22) als auch eine Drehbewegung relativ zu einer quer zur Rotationsachse (20) des Handhabungsrades (22) verlaufenden Drehachse (38a) umfaßt, wobei die Rotationsachse (20) des Handhabungsrades (22) bevorzugt in vertikaler Richtung steht, **dadurch gekennzeichnet, dass** die Handhabungseinrichtung (26) eine Welle (38) aufweist, die drehbar in einem Lagerkörper (34) gelagert ist, wobei das Halteelement (32) mit der Welle (38) um die Wellenachse (38a) mitdrehend gelagert ist, wobei das Halteelement (32) eine Halteelementwelle (90) aufweist, die eine weitere geometrische Drehachse, nämlich eine Halteelementdrehachse (90a), definiert, die quer zur Wellenachse (38a) angeordnet ist, wobei die Halteelementwelle (90a) drehbar in der Welle (38) angeordnet ist, wobei das Halteelement (32) relativ zur Welle (38) drehbar gelagert ist, wobei die Halteelementdrehachse (90a) zusammenfällt mit der Längsachse des vom Halteelement (32) gehaltenen Werkstückes (5).

9. Vorrichtung (24) nach dem vorhergehenden Anspruch, **dadurch gekennzeichnet, dass** die Wellenachse (38a) der Welle (38) wenigstens teilweise aus einer radialen in die tangentiale Richtung gekippt ausgerichtet ist, sodass sie entweder schräg zur radialen Richtung des Handhabungsrades (22) weisend, bevorzugt im Wesentlichen in tangentialer Richtung des Handhabungsrades (22) weisend, weiter bevorzugt in tangentialer Richtung des Handhabungsrades (22) weisend angeordnet ist.

10. Vorrichtung (24) nach einem der vorhergehenden Vorrichtungsansprüche, **dadurch gekennzeichnet, dass** die Welle (38) bewegungsgekoppelt verbunden ist mit der Halteelementwelle (90), wobei diese Bewegungskopplung bevorzugt mechanisch ausgeführt ist, weiter bevorzugt durch ein mit einem Kegelritzel (52) kämmendes Kegelrad (54), wobei weiter bevorzugt sind die Achsen des Kegelrades (54) und des Kegelritzels (52) um 90° versetzt zueinander angeordnet, wobei weiter bevorzugt die Zähnezahl des Kegelrades (54) und des Kegelritzels (52) identisch sind, wobei weiter bevorzugt die Welle (38) als Antriebswelle ausgeführt ist und im Kegelritzel (52) dreht.

11. Vorrichtung (24) nach einem der vorhergehenden Ansprüche 8-10, **dadurch gekennzeichnet, dass** die Drehbewegung der Welle (38) und/oder die Drehbewegung der Halteelementwelle (90) von einer Kurvensteuerung (64, 66) angetrieben ist, wobei bevorzugt die Welle (38) über ein Gelenk (70) unmittelbar oder mittelbar mit einer Antriebseinrichtung (64, 66) für den Antrieb der Drehung der Welle (38) verbunden ist.

12. Vorrichtung (24) nach einem der vorhergehenden Ansprüche 8-11, **dadurch gekennzeichnet, dass** das Gelenk (70) ein dreiarmiges Gelenk ist, wobei die drei Gelenkarme (7a, 72b, 72c) mit jeweils einem ihrer Enden drehgelenkig an einem gemeinsamen Drehlager (74) angelenkt sind, wobei einer der drei Gelenkarme (72a) mit seinem anderen, drehlagerabgewandten Ende drehgelenkig an einem von einem Antrieb, bevorzugt von einer Kurvensteuerung, bewegten Stellelement (62) angelenkt ist, wobei das Stellelement (62) bevorzugt von wenigstens einer Führungsstange (60) geführt ist, ein zweiter Gelenkarm (72c) an seinem anderen drehlagerabgewandten Ende drehgelenkig an einem Drehlager (80) angelenkt ist, das beabstandet von der Welle (38), aber mit der Welle (38) starr mitdrehend angeordnet ist, und der dritte Gelenkarm (72b) mit seinem drehlagerabgewandtem Ende drehgelenkig an einem relativ zum Handhabungsrad (22) ortsfest angeordneten Drehlager (78) angelenkt ist, wobei bevorzugt mindestens einer der Gelenkarme (72a) in seiner Armlänge verstellbar ausgeführt ist, wobei dies bevorzugt der am Stellelement (62) angelenkte Gelenkarm (72a) ist.

13. Vorrichtung (24) nach einem der vorhergehenden Ansprüche 8-12, **dadurch gekennzeichnet, dass** die Welle (38) drehgelagert in einem jochartigen Lagerkörper (34) gehalten ist, welcher fest oder lösbar positionsstabil mit dem Handhabungsrad (22) verbunden ist, wobei die Welle (38) drehbar in den beiden Jocharmen (36a, 36b) gelagert ist, die sich zu beiden Seiten der Jochöffnung (38) erstrecken, wobei das Halteelement (32) zwischen den beiden Jocharmen (36a, 36b) gelagert ist, bevorzugt mittig zwischen diesen beiden Jocharmen (36a, 36b), wobei bevorzugt das Halteelement (32) eine Greifstruktur mit einer Greiffläche aufweist, die in einer Greifebene liegt, wobei diese Greifstruktur mit ihrer Greiffläche mit einer Handhabungsstruktur (35) am Werkstück (5) zusammenwirkt, wobei die Greifebene beabstandet von der Drehachse (38a) der Welle (38) angeordnet ist.

14. Vorrichtung (24) nach einem der vorhergehenden Ansprüche 8-13, **dadurch gekennzeichnet, dass** die Vorrichtung zur Ausübung eines der in den Ansprüchen 1-7 angegebenen Verfahren ausgebildet und eingerichtet ist.

15. Vorrichtung (1) zur Behandlung von Werkstücken (5), insbesondere Plasmabeschichtungsvorrichtung, **gekennzeichnet durch** eine Handhabungsvorrichtung (24) nach einem der vorhergehenden Ansprüche 8-14, bevorzugt **gekennzeichnet durch** zwei Handhabungsvorrichtungen (24) nach einem der vorhergehenden Ansprüche 814, wobei bevorzugt zwischen einem Behandlungsrad (2) der Vorrichtung (1) und dem Handhabungsrad (22) ein Übergaberad (11) angeordnet ist.
